## Europäisches Patentamt

## European Patent Office

## Office européen des brevets

(19)

(11) Veröffentlichungsnummer: **0 173 010**
**B1**

(12) **EUROPÄISCHE PATENTSCHRIFT**

(45) Veröffentlichungstag der Patentschrift:
19.04.89

(21) Anmeldenummer: 85107388.2

(22) Anmeldetag: 14.06.85

(51) Int. Cl.⁴: **A 01 B 63/112,** G 01 L 5/13,
G 05 D 17/00

(54) Vorrichtung zum mechanischen Messen und zum Regeln der Zugkraft einer Zugmaschine.

(30) Priorität: 28.07.84 DE 3427907

(43) Veröffentlichungstag der Anmeldung:
05.03.86 Patentblatt 86/10

(45) Bekanntmachung des Hinweises auf die Patenterteilung:
19.04.89 Patentblatt 89/16

(84) Benannte Vertragsstaaten:
DE FR GB IT

(56) Entgegenhaltungen:
EP-A-0 068 915
DE-A-2 417 055
DE-A-2 921 126
DE-A-3 042 499
DE-A-3 212 342

(73) Patentinhaber: ROBERT BOSCH GMBH, Postfach
50, D-7000 Stuttgart 1 (DE)

(72) Erfinder: Hesse, Horst, Dr. Dipl.- Ing.,
Auberlenweg 13b, D-7000 Stuttgart 1 (DE)
Erfinder: Schwerin, Günther, Hohenstaufenstrasse
15, D-7141 Möglingen (DE)
Erfinder: Steprath, Werner, Bergheimer Strasse 42,
D-4047 Dormagen 11 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 173 010 B1

## Beschreibung

## Stand der Technik

Die Erfindung geht aus von einer Vorrichtung zum mechanischen Messen und Regeln der Zugkraft einer Zugmaschine nach der Gattung des Hauptanspruchs. Es ist schon eine solche Vorrichtung zum Regeln der Zugkräfte in den Unterlenkern eines an einem Schlepper angebauten Pfluges aus der DE-A-2 255 715 bekannt, die als Meßglied einen im Schleppergehäuse zweifach gelagerten Biegestab aufweist. Am Biegestab jeweils außerhalb der Lagerstellen greifen die beiden Unterlenker an. Zwischen beiden Lagerstellen ist ein als Freiträger ausgebildeter Meßstab angeordnet, der mit seinem einen Ende nahe einer Lagerstelle auf dem Biegestab fest eingespannt ist, während sein anderes, frei auskragendes Ende nahe der anderen Lager stelle die Durchbiegung des Biegestabes erfaßt. Das zugkraftabhangige Weg-Signal des Meßstabes wird über ein mechanisches Regelgestänge an das hydraulische Steuerglied für den Kraftheber weitergeleitet. Von Nachteil bei dieser Vorrichtung ist vor allem, daß hier die Bauweise des Schleppergehäuses auf die durchgehende Biegeachse abgestimmt werden muß. Diese Vorrichtung mit Biegeachse baut deshalb aufwendig und teuer. Bei manchen Schlepperbauweisen ist der Bauraum für die durchgehende Biegeachse nicht vorhanden und somit diese Vorrichtung nicht anwendbar. Der Austausch eines defekten Bauteiles, insbesondere von Biegeachse und Meßstab gestaltet sich schwierig. Ferner tritt bei der Durchbiegung des Biegestabes in den Lagerstellen Reibung auf, die zu einer entsprechenden Hysterese führt. Von Nachteil ist ferner, daß diese Vorrichtung mit durchgehendem Biegestab zum mechanischen Messen schlecht umstellbar ist auf nichtmechanische Meßverfahren. In manchen Fällen kann es auch nachteilig sein, daß hier nur die Summe der Unterlenkerkräfte erfaßt wird.

Ferner ist aus der WO-A-8 202 815 eine Vorrichtung um mechanischen Messen und zum Regeln der Zugkraft eine Zugmaschine mit Hilfe einer elektrohydraulischen Hubwerks-Regeleinrichtung bekannt, die ebenfalls mit einer zweifach im Gehäuse gelagerten Biegeachse arbeitet. Die Durchbiegung der Biegeachse wird hier von einer Fühlvorrichtung erfaßt, wozu an jedem stirnseitigen Ende der Biegeachse koaxial verlaufende Meßstäbe befestigt sind, welche gehäusefeste Hülsen durchgreifen und mit ihren freien Enden jeweils einen induktiv arbeitenden Wegaufnehmer betätigen. Auf diese Weise kann zwar die Vorrichtung mit durchgehender Biegeachse für eine elektrohydraulische Hubwerks-Regeleinrichtung verwendet werden. Diese Vorrichtung hat jedoch den Nachteil, daß sie in Längsrichtung der Biegeachse sehr lang baut. Auch hier ist die Biegeachse nur schwer zugänglich; in ihren Lagerstellen tritt ebenfalls Reibung und damit Hysterese auf. Die Vorrichtung baut somit aufwendig und teuer und ist nicht unempfindlich gegenüber Schwingungen.

Weiterhin ist aus der EP-A-0 088 915 eine Vorrichtung zum mechanischen Messen und Regeln der Zugkraft einer Zugmaschine mit Hilfe einer vollhydraulischen Hubwerks-Regeleinrichtung bekannt, bei der als Istwertaufnehmer ein Meßbolzen dient, auf dem ein Lenker zwischen zwei gehäusefesten Lagerstellen gelagert ist. Dieser Meßbolzen, der in einem hülsenförmigen, biegeelestischen Bauelement einen nicht biegeelastischer Meßstab aufnimmt, ist jedoch als hydromechanischer Wandler ausgebildet, der von einem Druckmittelstrom durchström wird. Der Meßbolzen eignet sich daher nicht zur Abgabe eines mechanischen Steuersignals. Zudem ist bei diesem hydraulischen Meßbolzen das hülsenförmige Bauelement einmal einseitig in einer einzigen Lagerstelle und bei einer anderen Bauart in beiden Lagerstellen gehäusefest eingespannt, wodurch sich in Verbindung mit der jeweiligen Anordnnrg des Meßstabes Auslenkungen ergeben, die nur hydraulisch auswertbar sind. Zudem eignet sich ein Meßbolzen mit einseitig eingespanntem, hülsenförmigen Bauelement, in dessen Einspannstelle zugleich der Meßstab fest eingespannt ist, weniger für hohe Anforderungen in der Praxis.

Ausgehend von dem eingangs genannten Stand der Technik ist es Aufgabe der Erfindung eine Vorrichtung zum mechanischen Messen und Regeln der Zugkraft einer Zugmaschine so weiterzubilden, daß sie bei einfacher, kompakter und robuster Bauweise ein relativ großes Ausgangssignal ermöglicht; zudem soll die Vorrichtung montagefreundlich sein.

Gelöst wird diese Aufgabe bei einer gattungsbildenden Vorrichtung durch die kennzeichnenden Merkmale des Anspruchs 1. Durch die Ausbildung des ohnedies vorhandenen Bolzens zum Anlenken eines Lenkers am Gehäuse zugleich Meßglied mit einem mechanischen Ausgang ergibt sich eine kompakte Bauweise der Vorrichtung. Außerdem ist der mechansche Meßbolzen leicht austauschbar gegenüber Bolzen anderer Bauart, so daß die Vorrichtung montagefreundlich und relativ leicht umstellbar ist. Dabei ist durch die Kombination eines beidseitig frei aufliegenden Bolzens mit mittig angreifender Last mit einem als Freiträger ausgebildeter Meßstab, dessen freies Ende im Bereich der relativ zur Einspannstelle entgegengesetzt liegenden Lagerstelle ein Steuersignal erzeugt, eine besonders einfache, kompakte und robuste Bauweise möglich, die ein relativ großes Ausgangssignal für eine mechanische Weiterverarbietung ermöglicht. Durch die in den Unteransssprüchen aufgeführten Meßnahmen sind vorteilhafte Weiterbildungen und Verbesserungen der im Anspruch 1 angegebenen Vorrichtung möglich, Besonders vorteilhaft ist eine Ausbildung nach Anspruch 2, wodurch sich geben einem relativ großen Steuersignal dessen einfache Weiterleitung ergibt, indem die Bewegung des freien Endes am Meßstab relativ zum Gehäuse gemessen wird. Eine zusätzlich Steigerung der Steuersignalgröße ergibt sich in vorteilhafter Weise, wenn gemäß Anspruch 3 relativ zur Bolzen-Hülse gemessen wird.

Weiterhin ist es zweckmäßig, wenn gemäß Anspruch 6 eine Lastbegrenzung für den Meßstab vorgesehen wird und wenn gemäß Anspruch 7 seine Bewegungsfreiheit auf die Meßebene begrenzt wird. Eine ganz besonders vorteilhafte Bauweise ergibt sich gemäß Anspruch 8, wodurch sich im Innern des Meßbolzens selbst eine weitere Vergrößerung des Ausgangssignals erzielen läßt, wobei die Vorrichtung besonder platzsparen und einfach baut. Äußerst vorteilhaft ist die Lagerung des Wegaufnehmers auf dem Meßbolzen gemäß Anspruch 11, wodurch der Meßbolzen Zugund Druckkräfte auch dann gut messen kann, wenn er mit Spiel in den Lagerstellen gelagert ist; zudem ergibt dies ein großes Ausgangssignal.

## Zeichnung

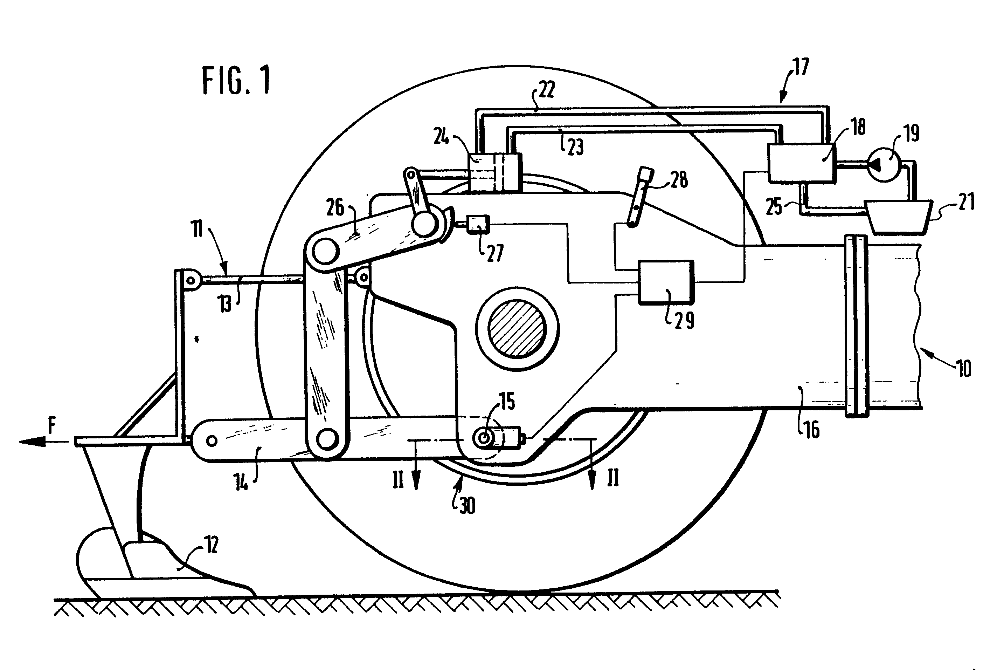

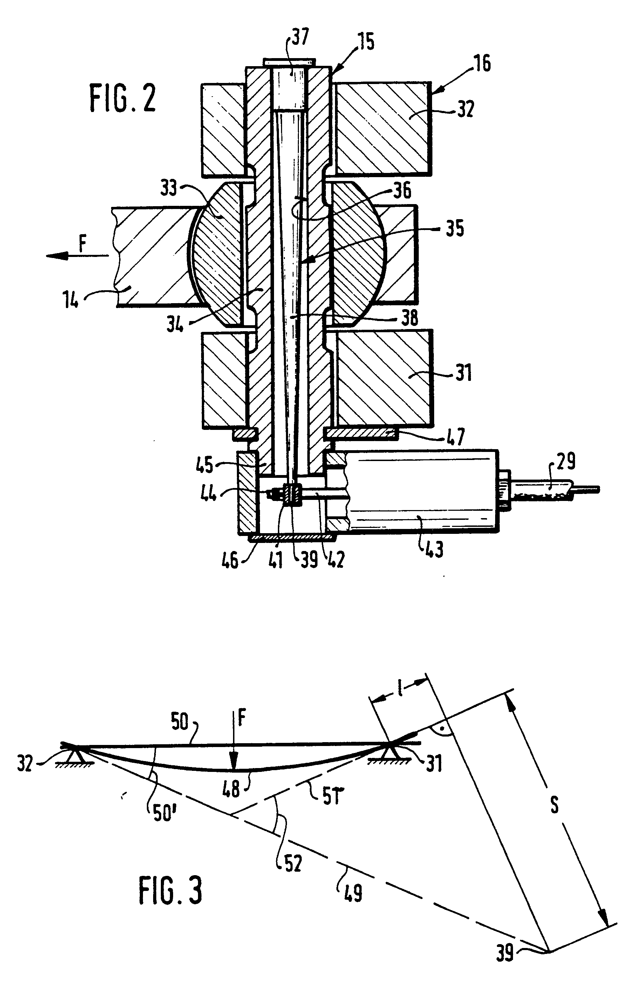

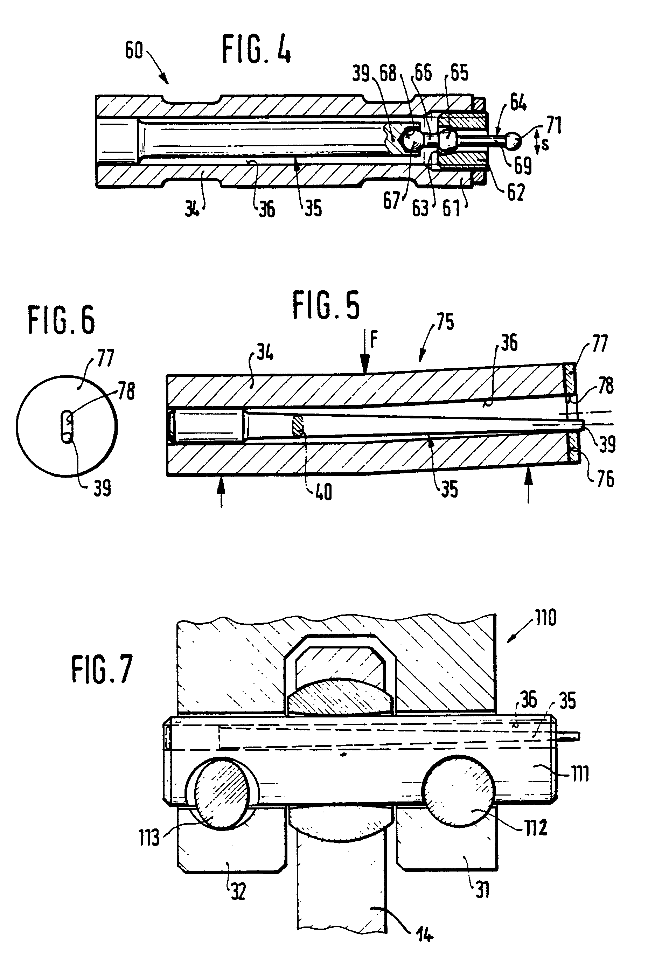

Mehrere Ausführungsbeispiele der Erfindung sind in der Zeichnung dargestellt und in der nachfolgenden Beschreibung näher erläutert. Es zeigen Figur 1 in vereinfachter Darstellung eine Seitenansicht des hinteren Teils einer Zugmaschine mit angelenktem Pflug und mit der erfindungsgemäßen Vorrichtung, Figur 2 einen Längsschnitt nach II - II in Figur 1 durch den Meßbolzen der Vorrichtung nach Figur 1, Figur 3 in vereinfachter graphischer Darstellung die Verhältnisse am belasteten Meßbolzen nach Figur 2, Figur 4 einen Längsschnitt durch eine zweite Ausführungsform eines Meßbolzens mit integrierter Verstärkung, Figur 5 einen Längsschnitt durch eine dritte Ausführungsform des Meßbolzens, Figur 6 eine Seitenansicht des Meßbolzens nach Figur 5 und Figur 7 zeigt einen Längsschnitt durch einen Teil einer zweiten Vorrichtung mit einer vierten Ausführungsform des Meßbolzens in vereinfachter Darstellung.

## Beschreibung der Ausführungsbeispiele

Die Figur 1 zeigt einen Teil einer Zugmaschine 10, an der über ein übliches Dreipunktgestänge 11 ein Pflug 12 angelenkt ist. Das Dreipunktgestänge hat einen Oberlenker 13 sowie zwei Unterlenker, von denen einfachheitshalber nur einer (14) dargestellt ist. Der Unterlenker 14 ist über einen Bolzen, der zugleich als mechanischer Meßbolzen 15 ausgebildet ist, am Gehäuse 16 der Zugmaschine 10 schvenkbar gelagert.

Zum Heben und Senken des Pfluges 12 ist auf der Zugmaschine 10 eine hydraulische Einrichtung 17 vorgesehen, zu der ein Regelventil 18 zählt. Das Regelventil wird von einer Pumpe 19 mit Druckmittel versorgt, das aus einem Tank 21 angesaugt wird. Das Regelventil 18 steuert über zwei Hydroleitungen 22, 23 einen hydraulischen Kraftheber 24 und ist über eine Rücklaufleitung 25 zum Tank 21 entlastbar. Zum Betätigen des Dreipunktgestänges 11 ist der Kraftheber 24 über ein Hubgestänge 26 am Unterlenker 14 angelenkt.

Der als Istwertgeber für die Zugkraft dienende Meßbolzen 15, ein als Istwertgeber für die Lage dienender Geber 27, ein als Sollwertgeber dienender Hebel 28 sowie das Regelventil 18 stehen miteinander über ein an sich bekanntes, mechanisches Regelgestänge 29 in Wirkverbindung. Von dem stark vereinfacht dargestellten Regelgestänge 29 werden die jeweils als Wege eingegebenen Ist- und Sollwerte so verarbeitet, daß verschiedene Regelungsarten möglich sind. Das Regelgestänge 29 steht in nicht näher gezeichneter Weise mit dem anderen Meßbolzen in Wirkverbindung, mit dem der nicht gezeichnete, zweite Unterlenker am Gehäuse 16 der Zugmaschine 10 gelagert ist. Da die Lagerung der beiden Unterlenker im Gehäuse symmetrisch zueinander und untereinander gleich ausgebildet ist, wird im folgenden lediglich auf den Unterlenker 14 und dessen Meßbolzen 15 eingegangen. Der Meßbolzen 15 ist somit ein Teil der Vorrichtung 30 zum mechanischen Messen und Regeln der Zugkraft der Zugmaschine 10.

Die Figur 2 zeigt im Schnitt die Lagerung des Unterlenkers 14 im Gehäuse 16 der Zugmaschine 10 nach II - II in Figur 1. Dabei sind in Figur 2 deutlich ein äußeres Lagerauge 31 sowie ein inneres Lagerauge 32 erkennbar, welche die gehäusefesten Lager stellen bilden. Zwischen den beiden Lageraugen liegt die Kugelhülse 33 des Unterlenkers 14. Beide Lageraugen 31, 32 und die dazwischen liegende Kugelhülse 33 verden von dem Meßbolzen 15 durchdrungen.

Der Meßbolzen 15 besteht im wesentlichen aus einer rohrförmigen Hülse 34 und einem in deren Innern angeordneten Meßstab 35. Die ein Teil des Meßbolzens 15 darstellende Hülse 34 bildet hierbei das federnde, biegeelastische Bauelement und besteht zu diesem Zweck aus einem geeigneten Material, das neben hoher Festigkeit auch eine geeignete Elastizität aufweist, wie z. B. Stahl. Die Hülse 34 ist dabei mit soviel Spiel in den beiden Lageraugen 31, 32 und in der Kugelhülse 33 ausgebildet, daß bei ihrer Durchbiegung unter Einwirkung der über den Unterlenker 14 angreifenden Zugkraft der Belastungsfall eines zweiseitig frei aufliegenden Trägers gilt. Der in einer durchgehenden Bohrung 36 der Hülse 34 angeordnete Meßstab 35 stellt das nicht biegeelastische Bauelement dar, das bei einer Durchbiegung der Hülse 34 seine starre Form beibehält. Der Meßstab 35 weist an seinem einen Ende einen kurzen zylindrischen Abschnitt 37 auf, mit dem er in der Bohrung 36 fest eingespannt ist. Die Einspannstelle des Meßstabes 35 ist somit in der Hülse 34 möglichst weit nach außen verlegt und liegt zudem im Bereich des inneren Lagerauges 32. Die Einspannstelle liegt somit am Ende der Biegelinie, so daß die Verformung der Hülse 34 voll ausgenutzt werden kann; sie kann auch unmittelbarangrenzend daran gelegt werden, wodurch keine Relativbewegungen in der Einspannstelle auftreten. Ausgehend vom zylindrischen Abschnitt 37 hat der Meßstab 35 einen sich stetig verjüngenden konischen Abschnitt 38, der mit seinem freien Ende 39 aus der Bohrung 36 am anderen Ende der Hülse 34 hinausragt. Das freie Ende 39 trägt eine Rolle 41, die mit einem beweglichen Teil 42 eines Wegaufnehmers 43 gekoppelt ist. Über eine Stellschraube 44 läßt sich diese Verbindung spielfrei einstellen. Der Regaufnehmer 43 ist auf einer bundartigen Verlängerung 45 der Hülse 34 befestigt. Die Bohrung 36 und der Innenraum des Wegaufnehmers 43 sind durch einen Deckel 46 nach außen verschlossen. Der vom Wegaufnehmer 43 abgegriffene Hub des freien Endes 39 wird an das Regelgestänge 29 weitergegeben. Die axiale Lage des Meßbolzens 15 in den Lageraugen 31, 32 ist durch ein am äußeren Lagerauge 31 befestigtes Halteblech 47 festgelegt. Es kann zusätzlich auch die Drehlage des Meßbolzens 15 absichern. Der Meßstab 35 bildet infolge seiner Ausbildung und Anordnung in der Hülse 34 einen einseitig fest eingespannten Freiträger, wobei dessen Einspannstelle 37 und dessen Signalabgriff am Ende 39 möglichst weit auseinanderliegen, und deswegen insbesondere bezüglich des Signalabgriffs das Ende 39 außerhalb der Lagerstelle 31 liegt und nicht zwischen den Lager stellen 31 und 32.

Die Wirkungsweise der Vorrichtung wird wie folgt erläutert, wobei neben Figur 1 und Figur 2 auch auf Figur 3 Bezug genommen wird. Eierbei wird die grundsätzliche Funktion der Regeleinrichtung als an sich bekannt vorausgesetzt, wonach z. B. bei reiner Zugkraftregelung der vom Meßbolzen 15 gemeldete Istwert der Zugkraft mit dem vom Hebel 28 vorgegebenen Sollwert im Regelgestänge 29 verglichen wird und abhängig von dem sich daraus ergebenden Differenzsignal die hydraulische Einrichtung 17 über das Hubgestänge 26 den Unterlenker 14 so hebt oder senkt, daß die Regelabweichung zu Null wird.

Wenn die Zugmaschine 10 den Pflug 12 nachschleppt, treten im Unterlenker 14 Zugkräfte F auf, welche von der Hülse 34 des Meßbolzens 15 auf die beiden Lageraugen 31 und 32 verteilt werden. Dabei wird die Hülse 34 in der in Figur 3 stark vereinfacht dargestellten Weise durchgebogen. Die Figur 2 zeigt den Meßbolzen 15 in unbelastetem Zustand, bei dem also keine nennenswerten Zugkräfte im Unterlenker 14 wirken. Wenn sich die Hülse 34 des Meßbolzens 15 unter dem Einfluß der Zugkraft F durchbiegt, wie dies in Figur 3 durch die Biegelinie 48 in übertriebener Form vereinfacht dargestellt ist, so behält der mit seinem zylindrischen Abschnitt 37 fest eingespannte Meßstab 35 seine tangentiale Lage zur Hülse 34 im Bereich der Einspannstelle bei. Da auf das freie Ende 39 des Meßstabes 35 praktisch keine Zugkräfte wirken, behält er seine gerade Form bei. Der Meßstab 35 nimmt somit eine Lage ein, wie sie in Figur 3 durch eine Tangente 49 an die Biegelinie 48 im inneren Lagerauge 32 veranschaulicht wird. Das freie Ende 39 des Meßstabes 35 liegt außerhalb der beiden Lager stellen 31 und 32 und zwar ca. um den Betrag 1 vom äußeren Lagerauge 31 entfernt. Der sich von der äußeren Lagerstelle 31 nach außen erstreckende Abschnitt der Hülse 34 mit seiner Verlämgerung 45 und einem Teil des Wegaufnehmers 43 wird nicht mehr von den Zugkräften im Unterlenker 14 verformt und nimmt somit bei belastetem Meßbolzen 15 eine Lage ein, wie sie eine zweite Tangente 51 an die Biegelinie 48 in der äußeren Lagerstelle 31 darstellt. Der Wegaufnehmer 43 erfaßt somit einen Hub s den er an das Regelgestänge 29 weitergibt. Der Hubs ist eine Funktion des Winkels 52, den die beiden Tangenten 49 und 51 miteinander einschließen.

Bei dem in Figur 2 und 3 dargestellten Meßbolzen 15 verformt sich die Hülse 34 unter Last nach dem Belastungsfall eines zweiseitig frei aufliegenden Trägers, da die Hülse 34 mit entsprechendem Spiel in den Lagerstellen 31, 32 angeordnet ist. Zugleich arbeitet der Meßstab 35 als einseitig fest eingespannter Freiträger, wobei die Einspannstelle 37 zumindest im Bereich einer Lagerstelle 32 und das freie Ende 39 zumindest im Bereich der anderen Lagerstelle 31 bzw. außerhalb von ihr liegt. Durch diese Ausbildung läßt sich mit dem mechanisch arbeitenden Meßbolzen 15 ein ausreichend großes Wegsignal erreichen, das sich zur Verarbeitung in einem mechanischen Regelstänge 29 eignet. Dabei wirkt sich die Abnahme des Weges s durch den Wegaufnehmer 43 außerhalb der Lagerstellen 31 und 32 und zwischen dem biegeelastischen (34) sowie dem nicht biegeelastischen Bauelement 35 vorteilhaft auf dessen Größe aus, ebenso die Lagerung des Wegaufnehmers 43 auf dem Meßbolzen 15. Die Größe des Hubes s ist dabei abhängig von der Größe der Zugkraft im Unterlenker 14.

Sollten im Unterlenker 14 infolge besonderer Verhältnisse am Pflug 12 und im Dreipunktgestänge 11 Druckkräfte auftreten, so können auch diese vom Meßbolzen 15 gemessen werden und entsprechende Signale an das Regelgestänge 29 weitergegeben werden. Dies begünstigt, trotz des Spieles der Hülse 34 in den Lagerstellen 31, 32, der am Meßbolzen 15 befestigte Wegaufnehmers 43.

Die Figur 4 zeigt einen Längsschnitt durch einen zweiten Meßbolzen 60, der sich von demjenigen nach Figur 2 vor allem durch seine integrierte Signalverstärkung auszeichnet. Der zweite Meßbolzen 60 unterscheidet sich vom ersten Meßbolzen 15 wie folgt, wobei für gleiche Bauelemente gleiche Bezugzeichen verwendet werden.

In der ein Teil des Meßbolzens 60 darstellenden Hülse 34 ist in dem äußeren Auschnitt 61, welcher dem äußeren Lagerauge 31 zugeordne ist, eine Gewindehülse 62 eingeschraubt. In einer der Hülsen-Bohrung 36 zugewandten Ausnehmung 63 der Gewindehülse 62 ist ein zweiarmiger Übersetzunghebel 64 mit einem Kugelkopf 65 gelagert. Der Übersetzungshebel 64 hat eine nach innen ragenden kurzen Hebelarm 66, dessen Kugelkopfende 67 in eine Sacklochbohrung 68 am freien Ende 39 des Meßstabes 35 ragt. Ein langer Kebelarm 69 des Übersetzungshebels 64 greift durch die Gewindehülse 62 hindurch nach außen, wobei von seinem Kopfende 71 das Auggangssignal des Meßbolzens 60 abgreifbar ist. Der Meßstab 35 ist zu diesem Zweck etwas kürzer ausgebildet,, so daß der Übersetzungshebel 64 noch in der Hülse 34 des zweiten Heßbolzens 60 im wesentlichen angeordnet werden kann.

Die Wirkungsweise des zweiten Meßbolzens entspricht weitgehend derjenigen des ersten Meßbolzens 15, wobei jedoch das am Kopfende 71 abnehmbare Ausgangssignal s entsprechend dem Verhältnis von langem Hebelarm 64 zu kurzem Hebelarm 66 vergrößert wird. Durch die Lagerung des Übersetzungshebels 64 innerhalb des zweiten Meßbolzens 60 ergibt sich eine äußerst kompakte, einfache und robuste Bauart. Zudem begünstigt das auf diese Weise erzielbare große Ausgangssignal den Einsatz des Meßbolzens 60 bei einer mechanischen Schlepperregelung, wo die mechanische Übertragung von Signalen zum Regelventil mit möglichst kleiner Verstärkung auskommen soll. Die Ausbildung von Kugelgelenken am Übersetzungshebel ermöglicht eine besonders einfache Konstruktion, bei der zusätzliche Verdrehsicherungen entfallen und bei der sich das Spiel stufenlos einstellen läßt.

Die Figur 5 zeigt einen Längsschnitt durch einen dritten Meßbolzen 75 in vereinfachter Darstellung und im belasteten Zustand. Der dritte Meßbolzen 75 unterscheidet sich vom ersten Meßbolzen 15 vor allem dadurch, daß an seiner äußeren Stirnseite 76 eine hülsenfeste Abdeckscheibe 77 mit einem Führungsschlitz 78 angeordnet ist, durch die das freie Ende 39 des Meßstabes 35 ragt. Außerdem ist der Meßstab 35 im Querschnitt - zur Verminderung von Reibung - so ausgebildet, daß er in Meßrichtung relativ steif, in senkrecht dazu liegender Richtung relativ weich ist, infolge Querschnitt 40. Wie die Figur 6 näher zeigt, ist das freie Ende 39 in dem Führungsschlitz 78 so geführt, daß ein Ausgangssignal des dritten Meßbolzens 75 nur in der zu messenden Richtung der Zugkraft F im Unterlenker 14 angezeigt wird. Bei reiner Transportfahrt der Zugmaschine 10 kann sich dagegen der Meßstab 35 verbiegen, zeigt aber an seinem Ende 39 keinen Meßweg an. Eine solche Ausführung ist besonders dann vorteilhaft, wenn der zugehörige Wegaufnehmer am Meßbolzen 75 die Richtung des Weges nicht unterscheiden kann. Fernerhin ist es besonders zweckmäßig, venn die Innenwand der durchgehenden Bohrung 36 in der Hülse 34 zugleich als Anschlag für das freie Ende 39 des Meßstabes 35 dient und somit dessen maximal Auslenkung begrenzt.

Die Figur 7 zeigt einen Teil einer zweiten Vorrichtung 110 mit einer vierten Ausführungsform eines meßbolzens 111, die sich von der ersten Vorrichtung 30 mit dem ersten Meßbolzen 15 nach Figur 2 wie folgt unterscheidet, wobei für gleiche Bauelemente gleiche Bezugzeichen verwendet werden.

Die zweite Vorrichtung 110 hat einen Meßbolzen 111, der in seinen beiden Lageraugen 31, 32 jeweils mit einem Querbolzen 112, 113 gelagert ist. Die zueinander parallel angeordneten Querbolzen 112, 113 verlaufen im wesentlichen mit ihren Längsachsen senkrecht zu der Ebene, in der die kraft des Unterlenkers 14 wirkt; zudem liegen ihre Längsachsen auch im Abstand von der Längsachse des Meßbolzens 111, so daß die Querbolzen 112, 113 die den Meßstab 35 aufnehmende Bohrung 36 nicht schneiden, welche nun exzentrisch zur Längsachse im Meßbolzen 111 verläuft. Zum Auffangen von Toleranz- und Längenänderung ist der innenliegende Bolzen 113 im Querschnitt oval ausgebildet.

Die Wirkungsweise der zweiten Vorrichtung 110 entspricht weitgehend derjenigen der ersten Vorrichtung 30 nach Figur 2; infolge der Lagerung mittels Querbolzen 112, 113 wird jedoch die bei der Durchbiegung des Meßbolzens 111 in den Lagerstellen 31, 32 sonst auftretende Schiebung und die damit verbundene Reibung weitgehend vermieden, so daß die zweite Vorrichtung 110 besonders hysteresearm arbeitet.

Selbstverständlich sind bei den gezeigten Ausführungsformen Änderungen möglich, ohne vom Gedanken der Erfindung abzuweichen. Die in Figur 2 gezeigte Lösung stellt eine besonders vorteilhaft kombinierte Bauweise dar.

Anstelle der gezeigten mechanischen Wegaufnehmer 43 können die Meßstäbe mit geeigneten elektromechanischen oder elektrohyraulischen Wandlern gekuppelt werden, so daß die Vorrichtung neben der gezeigten mechanischen Regeleinrichtung auch für eine vollhydraulische, elektrische oder gemischt arbeitende Regeleinrichtung verwendbar ist. Fernerhin kann die Vorrichtung auch zur Messung der Kräfte, sowohl Zug- als Druckkräfte, im Oberlenker eines Dreipunktgestänges eingesetzt werden.

**Patentansprüche**

1. Vorrichtung zum mechanischen Messen und zum Regeln der Zugkraft einer Zugmaschine (10), die einen in Abhängigkeit von der Zugkraft verstellbaren Kraftheber (24) zum Verstellen eines Dreipunktgestänges (11) und ein die Zugkräfte aufnehmendes biegeelastisches Bauelement (34) aufweist, dessen Durchbiegung durch eine den Kraftheber beeinflussende Fühlvorrichtung abtastbar ist, wozu die Fühlvorrichtung einen in Meßrichtung nicht biegeelastischen Meßstab (35) aufweist, der mit seinem einen Ende fest am biegeelastischen Bauelement (34) befestigt ist und an dessen freien Ende ein Steuersignal in Form eines Weges abgreifbar ist, dadurch gekennzeichnet, daß das biegeelastische Bauelement als Teil (34) eines Bolzens (15) ausgebildet ist, mit dem ein einzelner Lenker (14) zwischen zwei gehäusefesten Lagerstellen (31, 32) gelagert ist, daß dieses Teil (34) des Bolzens (15) hohl baut und in seinem Innern den Meßstab (35) aufnimmt, der sich im wesentlichen zwischen beiden gehäusefesten Lagerstellen erstreckt, daß der Bolzen (15, 60, 75) in bezug auf die beiden Lagerstellen (31, 32) als zweiseitig frei aufliegender Träger ausgebildet ist, daß der Meßstab (35) ein im Bereich einer Lagerstelle (32) fest eingespannter Freiträger ist, dessen freies Ende (39) sich zumindest bis in den Breich der anderen Lagerstelle (31) erstreckt.

2. Vorrichtung nach Anspruch 1, dadurch gekennzeichnet, daß als Steuersignal diejenige Größe ermittelt wird, welche die Tangente (49) an die Biegelinie (48) des durchgebogenen Bolzens (15) an der Befestigungsstelle (37) des Meßstabes (35) im Bereich der einen Lagerstelle (32) mit dem unbelasteten Bolzen in Form eines Winkels (50') bildet, indem der zu diesem Winkel (50') gehörende Abstand im Bereich der anderen Lagerstelle (31) bzw. in dem nach außen angrenzenden Bereich ermittelt wird.

3. Vorrichtung nach Anspruch 1, dadurch gekennzeichnet daß als Steuersignal der Winkel (52) ermittelt wird, den die Tangenten (49, 51) an die Biegelinie (48) des Bolzens (15) in beiden Lagerstellen (31, 32) miteinander bilden, indem der zu diesem Winkel (52) gehörende Abstand (s) im Bereich der anderen Lagerstelle (31) bzw. in dem nach außen angrenzenden Bereich ermittelt wird.

4. Vorrichtung nach einem der Ansprüche 1 bis 3, dadurch gekennzeichnet, daß der Meßstab (35) sich von seiner Einspannstelle (37) zum freien Ende (39) hin insbesondere konisch verjüngt.

5. Vorrichtung nach einem oder mehreren der Ansprüche 1 bis 4, dadurch gekennzeichnet, daß der Meßstab (35) im Bolzen (15, 60) in einer durchgehenden Bohrung (36) angeordnet ist.

6. Vorrichtung nach einem oder mehreren der Ansprüche 1 bis 5, dadurch gekennzeichnet, daß die Innenwand (36) der Bohrung (36) im Bolzen (15) als Anschlag für den Meßstab (35) ausgebildet ist.

7. Vorrichtung nach einem oder mehreren der Ansprüche 1 bis 6, dadurch gekennzeichnet, daß ein die Bewegung des freien Endes (39) des Meßstabes (35) in der Meßebene begrenzender Führungsschlitz (78) vorgesehen ist.

8. Vorrichtung nach einem der vorangehenden Ansprüche 1 bis 7, dadurch gekennzeichnet, daß in einer Hülse (34) des Bolzens (60) im Bereich des dem freien Ende (39) des Meßstabes zugeordneten Abschnitts (61) ein das Wegsignal vergrößerndes Übersetzungsglied (64) gelagert ist.

9. Vorrichtung nach Anspruch 8, dadurch gekennzeichnet, daß das Übersetzungsglied (64) mittels eines Kugelgelenks (65, 63) in der Hülse (34) des Bolzens (60) gelagert ist und uber ein zweites Kugelgelenk (67, 68) an einem kurzen Hebelarm (66) mit dem Meßstab (35) gekoppelt ist.

10. Vorrichtung nach Anspruch 8, dadurch gekennzeichnet, daß eine in den Bolzen (60) einschraubbare Gewinde-Hülse (62) das Übernetzungsglied (64) an seinem Kugelkopf (65) lagert.

11. Vorrichtung nach einem oder mehreren der Ansprüche 1, 3 bis 10, dadurch gekennzeichnet, daß ein Wegaufnehmer (43) auf einer über die Lagerstelle (31) hinausragenden Verlängerung (45) der Bolzen-Hülse (34) angeordnet ist.

12. Vorrichtung nach einem oder mehreren der vorangehenden Ansprüche 1 bis 11, dadurch gekennzeichnet, daß ein vom Meßstab (35) betätigtes freies Ende (39, 71) zur Abnahme des Steuersignals außerhalb der Bolzen-Hülse (34) liegt.

13. Vorrichtung nach einem oder mehreren der Ansprüche 1 bis 12, dadurch gekennzeichnet, daß der Meßbolzen (111) in beiden Lageraugen (31, 32) über zueinander parallel verlaufende Querbolzen (112, 113) gelagert ist, deren Längsachsen im Abstand zur Längsachse des Meßbolzens (111) verlaufen und die im Abstand von der den Meßstab (35) aufnehmenden Bohrung (35) liegen.

14. Vorrichtung nach Anspruch 13, dadurch gekennzeichnet, daß mindestens ein Querbolzen (113) einen zwei Krümmungs-Mittelpunkte aufweisenden, ovalen Querschnitt hat.

## Claims

1. Device for mechanically measuring and for controlling the tractive force of a motor tractor (10), which has a power lift (24) for adjusting a three-point linkage (11), which power lift can be adjusted as a function of the tractive force, and a flexurally elastic element (34) which absorbs the tractive forces and whose bending can be sampled by a feeler which influences the power lift, for which purpose the feeler has a measuring rod (35) which is not flexurally elastic in the measuring direction and is firmly secured by one end on the flexurally elastic element (34) and at the free end of which a control signal in the form of a displacement can be taken off, characterized in that the flexurally elastic element is designed as part (34) of a pin (15) by means of which a single arm (14) is mounted between two bearings (31, 32) which are fixed with respect to the casing, in that this part (34) of the pin (15) is of hollow construction and accommodates in its interior the measuring rod (35), which extends essentially between two bearings which are fixed with respect to the casing, in that the pin (15, 60, 75) is designed as a beam freely supported at both ends, in relation to the two bearings (31, 32), in that, in the region of one bearing (32) the measuring rod (35) is a firmly held canti lever, the free end (39) of which extends at least into the region of the other bearing (31).

2. Device according to Claim 1, characterized in that as control signal that variable is determined which the tangent (49) to the elastic line (48) of the bent pin (15) at the fixing location (37) of the measuring rod (35) in the region of one bearing (32) forms with the unloaded pin in the form of an angle (50') by determining the distance associated with this angle (50') in the region of the other bearing (31) or in the adjacent region to the outside.

3. Device according to Claim 1, characterized in that as control signal the angle (52) is determined which the tangents (49, 51) to the elastic line (48) of the pin (15) in the two bearings (31, 32) form with one another by determining the distance (s) associated with this angle (52) in the region of the other bearing (31) or in the adjacent region to the outside.

4. Device according to one of Claims 1 to 3, characterized in that the measuring rod (35) tapers from its fixing location (37) towards the free end (39), in particular conically.

5. Device according to one or more of Claims 1 to 4, characterized in that the measuring rod (35) in the pin (15, 60) is arranged in a through bore (36).

6. Device according to one or more of Claims 1 to 5, characterized in that the inside wall (36) of the bore (36) in the pin (15) is designed as a stop for the measuring rod (35).

7. Device according to one or more of Claims 1 to 6, characterized in that a guide slot (78) which limits the movement of the free end (39) of the measuring rod (35) in the measurement plane is provided.

8. Device according to one of preceding Claims 1 to 7, characterized in that a transmission member (64) which augments the displacement signal is mounted in a sleeve (34) of the pin (60) in the region of the section (61) associated with the free end (39) of the measuring rod.

9. Device according to Claim 8, characterized in that the transmission member (64) is mounted in the sleeve (34) of the pin (60) by means of a ball joint (65, 63) and is coupled to the measuring rod (35) via a second ball joint (67, 68) on a short lever arm (66).

10. Device according to Claim 8, characterized in that a threaded sleeve (62) which can be screwed into the pin (60) supports the transmission member (64) at its spherical head (65).

11. Device according to one or more of Claims 1 and 3 to 10, characterized in that a displacement sensor (43) is arranged on an extension (45) of the pin sleeve (34), said extension protruding beyond the bearing (31). .

12. Device according to one or more of preceding Claims 1 to 11, characterized in that a free end (39, 71) for taking off the control signal, said end being actuated by the measuring rod (35), lies outside the pin sleeve (34).

13. Device according to one or more of Claims 1 to 12, characterized in that the gauge pin (111) is mounted in both bearing lugs (31, 32) via mutually parallel transverse pins (112, 113), the longitudinal axes of which extend at a distance from the longitudinal axis of the gauge pin (111) and which lie at a distance from the bore (35) accommodating the measuring rod (35).

14. Device according to Claim 13, characterized in that at least one transverse pin (113) has an oval cros-section having two centres of curvature.

**Revendications**

1. Dispositif de mesure mécanique et de régulation de l'effort de traction d'un tracteur (10) qui présente un vérin (24) réglable en fonction de l'effort de traction pour le réglage d'une timonerie à trois points (11) et un élément de construction élastique en flexion, encaissant les efforts de traction, dont la flexion peut être palpée par un dispositif palpeur pilotant le vérin, le dispositif palpeur présentant dans ce but une tige de mesure (35) non élastique en flexion dans le sens de la mesure, qui est fixée rigidement à l'une de ses extrémités sur l'élément de construction (34) élastique en flexion et à l'extrémité libre de laquelle un signal de commande peut être relevé sous la forme d'une course, caractérisé en ce que l'élément élastique en flexion est constitué par la partie (34) d'un axe (15) avec lequel une barre de traction indivuelle (14) est montée entre deux paliers (31, 23) solidaires du carter, que cette partie (34) de l'axe (15) est creuse et loge la tige de mesure (35) qui s'étend essentiellement entre deux paleirs solidaires du carter, que l'axe (15, 60, 75) se présente par rapport aux deux paliers (31, 32) comme une poutre sur deux appuis libres, que la tige de mesure (35) est une console encastrée dans la zone d'un palier (23) et dont l'extrémité libre (39) arrive au moins jusqu'à la zone de l'autre palier (31).

2. Dispositif suivant la revendication 1, caractérisé en ce que l'on détecte comme signal de commande la grandeur constituée par l'angle (50') que forme la tangente (49) à la ligne de flexion (49) de l'axe (15) fléchi, à l'endroit de la fixation (37) de la tige de mesure (35) dans la zone de l'un des paliers (32), avec l'axe non chargé, la distance correspondant à cet angle (50') étant relevée dans la zone de l'autre palier (31) ou dans la zone contigüe à l'extérieur.

3. Dispositif suivant la revendication 1, caractérisé en ce que l'on détecte comme signal de commande l'angle (52) que forment entre elles les tangentes (49, 15) à la ligne de flexion (48) de l'axe (15) dans les deux paliers (31, 32), l'écartement (s) correspondant à cet angle étant relevé dans la zone de l'autre palier (31) ou dans la zone contigüe à l'extérieur.

4. Dispositif suivant l'une des revendications 1 à 3, caractérisé en ce que la tige de mesure (35) se rétrécit, notamment suivant un cone, de son encastrement (37) jusqu'à son extrémité libre (39).

5. Dispositif suivant une ou plusieurs parmi les revendications 1 à 4, caractérisé en ce que la tige de mesure (35) est disposée dans un alésage (36) traversant de part en part l'axe (15, 60).

6. Dispositif suivant une ou plusieurs parmi les revendications 1 à 5, caractérisé en ce que la paroi interne (36) de l'alésage (36) dans l'axe (15) sert de butée pour la tige de mesure (35).

7. Dispositif suivant une ou plusieurs parmi les revendications 1 à 6, caractérisé en ce qu'il est prévu une fente de guidage (78) limitant dans le plan de mesure le mouvement de l'extrémité libre (39) de la tige de mesure (35).

8. Dispositif suivant l'une des revendications précédentes 1 à 7, caractérisé en ce qu'un organe d'amplification (64) amplifiant le signal de course est monté dans une douille (34) de l'axe (60) dans la zone du tronçon (61) faisant face à l'extrémité libre (39).

9. Dispositif suivant la revendication 8, caractérisé en ce que l'organe d'amplification (64) est monté au moyen d'une rotule (65, 63) dans la douille (34) de l'axe (60) et est accouplée avec la tige de mesure (35) par l'intermédiaire d'une deuxième rotule (67, 68) sur un bras de levier court (66).

10. Dispositif suivant la revendication 8, caractérisé en ce qu'une douille filetée (62) qui se visse dans l'axe (60) sert de palier à la tête sphérique (65) de l'organe d'amplification (64).

11. Dispositif suivant une ou plusieurs parmi les revendications 1, 3 à 10, caractérisé en ce qu'un capteur de déplacement (43) est monté sur un prolongement (45) de la douille d'axe (34) dépassant du palier (31).

12. Dispositif suivant une ou plusieurs parmi les revendications précédentes 1 à 11, caractérisé en ce qu'une extrémité libre (39, 71) actionnée par la tige de mesure (35) se trouve à l'extérieur de la douille d'axe (34) pour la captation du signal de commande.

13. Dispositif suivant une ou plusieurs parmi les revendications 1 à 12, caractérisé en ce que l'axe de mesure (111) est monté dans les deux yeux de palier (31, 32) par des axes transversaux (112, 113) parallèles entre eux, dont les axes longitudinaux se trouvent à distance de l'axe longitudinal de l'axe de mesure (111) et qui se trouvent à distance de l'alésage (36) logeant la tige de mesure (35).

14. Dispositif suivant la revendication 13, caractérisé en ce qu'au moins un axe transversal (113) possède une section ovale présentant deux centres de courbure.

FIG. 1

FIG. 2

FIG. 3

## FIG. 4

## FIG. 6

## FIG. 5

## FIG. 7